# FASCICULE DE BREVET EUROPEEN

(11) **EP 3 603 460 B1**
(45) Date de publication et mention de la délivrance du brevet: **07.06.2023**
(21) Numéro de dépôt: 19185082.5
(22) Date de dépôt: 09.07.2019
(51) Int. Cl.: A47G 29/14, H04M 9/02, H04M 11/02

(54) **SYSTEME D'INTERPHONIE POUR UNE RESIDENCE**
GEGENSPRECHANLAGENSYSTEM FÜR EINE WOHNUNG
INTERPHONE SYSTEM FOR A RESIDENCE

(30) Priorité: 31.07.2018 FR 1857138
(43) Date de publication de la demande: 05.02.2020
(73) Titulaire: Cogelec, 85290 Mortagne-sur-Sèvre (FR)
(72) Inventeur: LECLERC, Roger, 85130 Les Landes Genusson (FR); MARCHAL, Norbert, 49300 Cholet (FR)
(74) Mandataire: Colombo, Michel

(56) Documents cités:
- EP-A1- 2 239 932
- WO-A1-95/15050
- JP-A- H05 246 488

## Description

L'invention concerne un système d'interphonie pour une résidence. L'invention concerne également un module de gestion à distance d'une boîte aux lettres et un portier électrique pour ce système d'interphonie.

Des systèmes connus d'interphonie comportent :
- une serrure électrique déplaçable, en réponse à la réception d'une commande d'ouverture :
   - depuis une position verrouillée dans laquelle elle verrouille une porte d'entrée dans une position fermée où cette porte d'entrée interdit l'accès à un hall d'entrée depuis l'extérieur de la résidence,
   - vers une position déverrouillée dans laquelle la porte d'entrée peut librement être déplacée de sa position fermée vers une position ouverte où un livreur peut pénétrer à l'intérieur du hall d'entrée,
- un portier électrique équipé :
   - d'une interface homme-machine permettant à un visiteur, situé à l'extérieur du hall d'entrée de la résidence, de sélectionner l'un quelconque des résidents de la résidence et de communiquer avec le résident sélectionné,
   - d'un émetteur/récepteur relié à un réseau public de télécommunication, cet émetteur/récepteur étant apte à établir, par l'intermédiaire de ce réseau public de télécommunication, une liaison de transmission d'informations avec un combiné du résident sélectionné à l'aide de l'interface homme-machine, et
   - un module de commande de la serrure électrique de la porte d'entrée apte à recevoir, par l'intermédiaire de la liaison de transmission d'informations établie à l'aide de l'émetteur/récepteur du portier électrique, une commande d'ouverture transmise en réponse à l'acquisition d'une commande par le combiné du résident sélectionné, et à transmettre cette commande d'ouverture reçue à la serrure électrique de la porte d'entrée, et
- au moins une boîte aux lettres logée à l'intérieur du hall d'entrée, chaque boîte aux lettres comportant un battant déplaçable entre :
   - une position ouverte dans laquelle un colis peut être librement introduit ou retiré de l'intérieur de la boîte aux lettres, et
   - une position fermée dans laquelle l'introduction ou le retrait d'un colis depuis l'intérieur de la boîte aux lettres est interdit.

Par ailleurs, des boîtes aux lettres dites « intelligentes » ont été développées. De telles boîtes aux lettres intelligentes permettent notamment au propriétaire de la boîte aux lettres d'autoriser et, en alternance, d'interdire à distance l'ouverture de cette boîte aux lettres pour qu'un livreur puisse y déposer un colis. A cet effet, ces boîtes aux lettres intelligentes comportent typiquement en plus :
- une serrure électrique,
- un émetteur/récepteur relié au réseau public de télécommunication pour établir une liaison de transmission d'informations avec un terminal mobile du propriétaire de la boîte aux lettres, et
- un module de gestion à distance de la boîte aux lettres.

Par exemple, une telle boîte aux lettres intelligente est décrite dans la demande US2003231112A1. De l'état de la technique est également connu de WO95/15050A1, EP2239932A1 et JPH05246488A. Dans WO95/15050A1, un portier électrique est raccordé aux combinés des résidents par l'intermédiaire d'un réseau local commuté. Cela permet aux résidents de déclencher l'ouverture de la porte d'entrée à partir de leurs combinés. De plus, dans WO95/15050A1, une console, séparée du portier électrique, est située à proximité des boîtes aux lettres. Un code de déverrouillage peut être saisi, par un livreur, sur un clavier de cette console afin de déclencher l'ouverture d'une de ces boîtes aux lettres. WO95/15050A1 ne permet pas de commander à distance l'ouverture d'une boîte aux lettres.

Jusqu'à présent, l'installation de boîtes aux lettres intelligentes à l'intérieur des halls d'entrée des résidences peine à se développer, notamment à cause du coût de fabrication de ces boîtes aux lettres intelligentes et du coût d'installation de ces boîtes aux lettres intelligentes à l'intérieur du hall d'entrée d'une résidence.

L'invention vise donc à simplifier l'architecture des boîtes aux lettres intelligentes pour réduire leur coût de fabrication et en simplifier l'installation à l'intérieur du hall d'entrée d'une résidence.

Elle a donc pour objet un système d'interphonie conforme à la revendication 1.

Les modes de réalisation de ce système d'interphonie peuvent comporter une ou plusieurs des caractéristiques des revendications dépendantes.

L'invention a également pour objet un module de gestion à distance d'une boîte aux lettres pour le système d'interphonie objet de la présente demande.

Enfin, l'invention a également pour objet un portier électrique pour le système d'interphonie objet de la présente demande.

L'invention sera mieux comprise à la lecture de la description qui va suivre, donnée uniquement à titre d'exemple non-limitatif et faite en se référant aux dessins sur lesquels :
- la figure 1 est une illustration schématique d'une résidence équipée d'un système d'interphonie ;
- la figure 2 est une illustration schématique et en perspective d'une boîte aux lettres intelligente utilisée dans le système d'interphonie de la figure 1 ;
- la figure 3 est une illustration schématique de l'architecture d'un portier électrique utilisé dans le système d'interphonie de la figure 1 ;
- la figure 4 est un organigramme d'un procédé de fonctionnement du système de la figure 1 ;
- la figure 5 est une illustration schématique d'un autre mode de réalisation d'un système d'interphonie ;
- la figure 6 est une illustration schématique et en perspective d'un autre mode de réalisation d'une boîte à lettres intelligente.

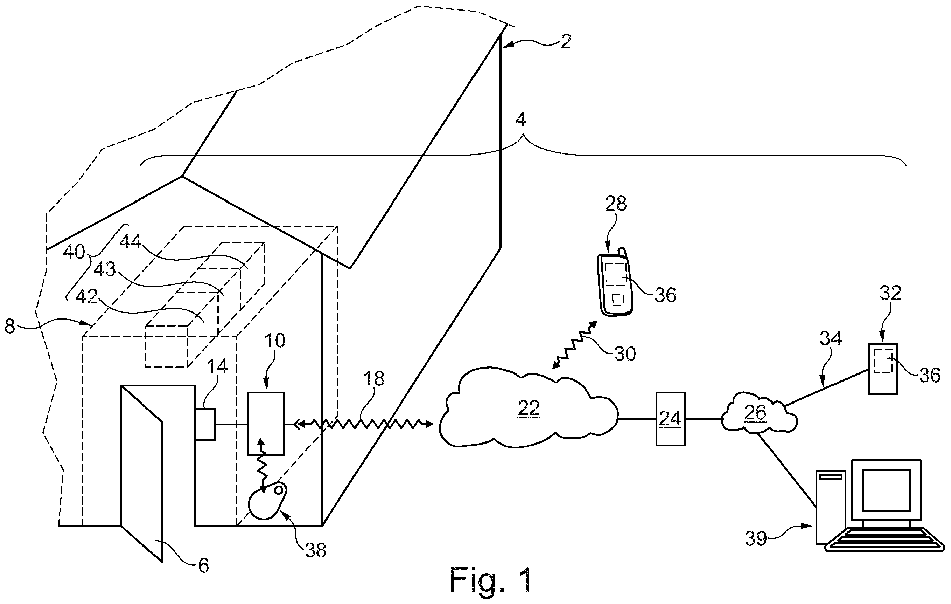

La figure 1 représente une résidence 2 équipée d'un système d'interphonie 4. Par exemple, la résidence 2 est un habitat collectif tel qu'un immeuble ou un groupe d'immeubles.

Ici, la résidence 2 est équipée d'une porte d'entrée 6 qui débouche dans un hall d'entrée 8. La porte 6 est déplaçable entre :
- une position ouverte dans laquelle elle autorise l'accès au hall 8 depuis l'extérieur de la résidence 2, et
- une position fermée dans laquelle elle interdit l'accès au hall 8 depuis l'extérieur de la résidence 2.

Le système 4 comporte un portier électrique 10. Le châssis du portier 10 est scellé sans aucun degré de liberté dans un mur de la résidence 2 à l'extérieur et, généralement, à proximité de la porte 6.

Le portier 10 permet d'appeler un résident de la résidence 2, de communiquer avec celui-ci et de commander le déverrouillage de la porte 6 et, en alternance, d'interdire ce déverrouillage. A cet effet, le portier 10 est raccordé à une serrure électrique 14. La serrure 14 est déplaçable, en réponse à une commande d'ouverture, depuis une position verrouillée vers une position déverrouillée. Dans la position verrouillée, la serrure 14 verrouille la porte 6 dans sa position fermée. Dans la position déverrouillée, la serrure 14 déverrouille la porte 6 de sorte que la porte 6 est librement déplaçable, par exemple à la main, depuis sa position fermée vers sa position ouverte. Par exemple, la serrure électrique 14 est une gâche électrique.

Ici, le portier 10 est raccordé au combiné des résidents par l'intermédiaire d'une liaisons 18 et d'un réseau public 22 de télécommunication. Par exemple, la liaison 18 est une liaison sans fil et le réseau 22 est un réseau public sans fil. Par exemple, le réseau 22 est un réseau UMTS (Universal Mobile Télécommunication System).

Ce réseau 22 peut être lui-même raccordé par l'intermédiaire d'une passerelle 24 à d'autres réseaux publics de télécommunication tels qu'un réseau filaire 26. Par exemple, le réseau 26 est un réseau à commutation de circuits. Par exemple, le réseau 26 est un réseau RTC (Réseau Téléphonique Public Commuté) ou un réseau à commutation de paquets (par exemple Internet).

Les combinés du système 4 sont raccordés à l'un de ces réseaux publics. Pour simplifier la figure 1 :
- seul un combiné 28 directement raccordé au réseau 22 par l'intermédiaire d'une liaison téléphonique 30 sans fil a été représenté, et
- seul un combiné 32 directement raccordé par l'intermédiaire d'une liaison filaire 34 au réseau 26 a été représenté.

Ces combinés sont des combinés téléphoniques standards aptes a établir une communication téléphonique avec n'importe quel autre combiné raccordé au même réseau public et non pas seulement avec le portier 10. Le combiné 28 est ici en plus un terminal mobile directement transportable à la main par le résident. Il s'agit typiquement d'un téléphone mobile, tel qu'un smartphone. Le combiné 32 est, par exemple, un téléphone fixe ou un ordinateur personnel équipé d'un microphone, d'un haut-parleur, d'un module de connexion au réseau 26 et d'une application de téléphonie lui permettant de communiquer avec d'autres combinés raccordés au réseau 26 ou 22.

Chacun de ces combinés est apte à recevoir des appels en provenance du portier électrique 10 et à établir une communication entre un visiteur présent devant ce portier et le résident titulaire de ce combiné. Par exemple, la communication entre le portier 10 et le combiné du résident prend ici la forme d'une visioconférence. Typiquement, dans le cadre de cette visioconférence, seules les images du visiteur sont transmises au combiné du résident. A l'inverse, les images du résident ne sont pas transmises au portier 10.

Ici, chacun des combinés 28 et 32 est équipé d'une interface homme-machine 36 permettant l'établissement de cette communication avec le visiteur. Par exemple, l'interface 36 comporte au moins un écran, un microphone, un haut-parleur et, éventuellement, une caméra.

De plus, chacun des combinés est apte à commander à distance le déverrouillage de la porte 6 de la résidence 2. A cet effet, l'interface homme-machine 36 comprend des moyens pour acquérir une commande d'ouverture de la porte 6. Par exemple, ces moyens sont réalisés à l'aide d'un clavier ou d'un écran tactile.

Pour simplifier la figure 1, les combinés 28 et 32 ont été représentés comme étant situés à l'extérieur de la résidence 2. Toutefois, ceux-ci fonctionnent de la même manière qu'ils soient situés à l'intérieur ou à l'extérieur de la résidence 2. Lorsque le combiné 32 est situé à l'intérieur de la résidence 2, il est typiquement situé à l'intérieur d'un appartement de la résidence 2.

Le système 4 comporte également des clés d'accès permettant aux résidents de déverrouiller la porte d'entrée 6 lorsqu'il présente leurs clés devant une centrale d'accès. Dans ce mode de réalisation particulier, la centrale d'accès est incorporée à l'intérieur du portier électrique 10. Ces clés contiennent des informations d'accès qui autorisent ou, au contraire, interdisent l'accès à la résidence 2. De préférence, les informations d'accès sont lues sans contact par la centrale d'accès par l'intermédiaire d'une liaison courte distance de transmission d'informations. Par « liaison courte distance », on désigne une liaison de moins de dix mètres. Par exemple, les clés du système 4 sont des clés à transpondeurs, c'est-à-dire de clés équipées d'un transpondeur. Généralement, un transpondeur est un circuit électronique alimenté à partir d'ondes électromagnétiques rayonnées par la centrale d'accès. Ainsi, ces clés ne comportent pas nécessairement une batterie d'alimentation. Pour simplifier la figure 1, seule une clé 38 à transpondeur a été représentée.

Le système 4 comporte également un poste 39 de configuration à distance du portier 10. Ce poste 39 permet notamment de transmettre des instructions de mise à jour des paramètres programmables du portier 10 par l'intermédiaire d'une liaison de transmission d'informations établie de la même manière que celle utilisée par ce portier 10 pour communiquer avec les combinés des résidents. Ici, le poste 39 est représenté comme étant raccordé au portier 10 par l'intermédiaire, successivement, du réseau 26, de la passerelle 24, du réseau 22 et de la liaison 18.

Le système 4 comporte aussi un groupe 40 de boîtes aux lettres intelligentes situé à l'intérieur du hall 8. Pour simplifier la figure 1, seules trois boîtes aux lettres 42 à 44 sont représentées. Le système 4 comporte une boîte aux lettres privative par appartement de la résidence 2. Ainsi, généralement, le groupe 40 comporte plus de quatre, cinq ou dix boîtes aux lettres privatives. Par exemple, les boîtes aux lettres 42 et 43 sont des boîtes aux lettres privatives. Ici, en plus des boîtes aux lettres privatives, le groupe 40 comporte une boîte aux lettres commune à l'ensemble des appartements de la résidence 2. Il s'agit ici de la boîte aux lettres 44.

Typiquement, les boîtes aux lettres privatives sont identiques les unes aux autres et seule la boîte aux lettres 42 est décrite ci-dessous plus en détail. Dans ce mode de réalisation, la boîte aux lettres 44 est structurellement identique à la boîte aux lettres 42 sauf qu'elle diffère de cette boîte aux lettres par ses dimensions. En effet, typiquement, la boîte aux lettres 44 est prévue pour recevoir des colis volumineux qui ne peuvent pas être déposés à l'intérieur des boîtes aux lettres privatives. Ainsi, le volume intérieur de la boîte aux lettres 44 est supérieur et, par exemple, deux ou trois fois supérieur au volume intérieur de la boîte aux lettres 42.

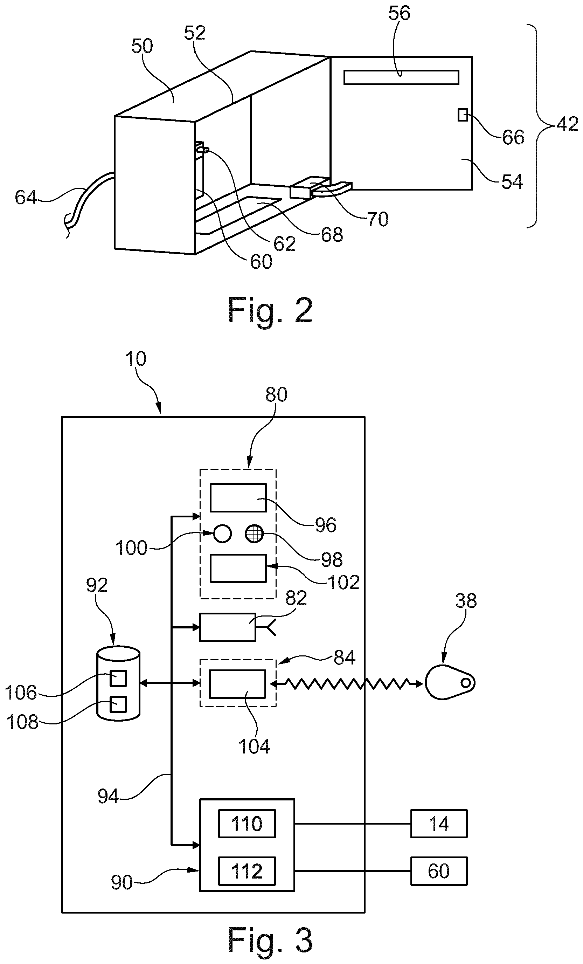

La figure 2 représente plus en détail la boîte aux lettres 42. Cette boîte aux lettres 42 comporte un coffre 50 essentiellement parallélépipédique, fixé sans aucun degré de liberté sur un mur vertical du hall 8. Ce coffre 50 définit un logement à l'intérieur duquel de petits colis peuvent être déposés en passant à travers une ouverture 52 du coffre 50. L'ouverture 52 présente une surface supérieure à 100 cm² et, généralement supérieure à 500 cm². Normalement, la surface de l'ouverture 52 est inférieure à 1 m² ou 0,5 m².

La boîte 42 comporte un battant 54 déplaçable, par exemple manuellement, entre une position ouverte, représentée sur la figure 2, et une position fermée. Dans la position ouverte, le battant 54 laisse libre l'accès à l'intérieur du coffre 50 de sorte qu'un colis peut être déposé à l'intérieur de ce coffre. A l'inverse, dans la position fermée, le battant 54 interdit l'accès à l'intérieur du coffre 50. Ainsi, dans la position fermée, un résident ou toute autre personne ne peut pas retirer un colis de l'intérieur du coffre 50.

Typiquement, la face extérieure du battant 54, c'est-à-dire la face du battant 54 tournée du côté opposé à la face tournée vers l'intérieur du coffre 50, est pourvue d'une étiquette portant le nom ou un identifiant d'un appartement ou d'un résident de la résidence 2. Ici, le battant 54 comporte aussi une fente traversante 56 à travers laquelle le courrier peut être introduit à l'intérieur du coffre 50 même lorsque le battant 54 est dans sa position fermée.

Le coffre 50 et le battant 54 sont conçus pour résister aux actes de vandalisme et aux tentatives d'effraction. A cet effet, ils sont réalisés dans des matériaux durs, c'est-à-dire des matériaux présentant un module de Young à 25°C supérieur à 10 GPa ou 100 GPa. Par exemple, le coffre 50 et le battant 54 sont réalisés en acier.

La boîte 42 comporte également une serrure électrique 60 déplaçable de façon réversible, en réponse à la réception d'une commande de déverrouillage, depuis une position verrouillée vers une position déverrouillée. Dans la position verrouillée, la serrure 60 verrouille le battant 54 dans sa position fermée. Dans sa position déverrouillée, le battant 54 peut être librement déplacé, par exemple à la main, depuis sa position fermée vers sa position ouverte.

La serrure 60 est alimentée à l'aide de piles ou raccordée à un réseau de distribution d'électricité. La serrure 60 est également raccordée par une liaison 64 au portier 10. La liaison 64 peut être une liaison filaire ou une liaison sans fil. Ici, la liaison 64 est une liaison filaire.

Dans ce mode de réalisation, la serrure 60 comporte en plus un bouton 62 tel qu'un bouton poussoir. Ce bouton 62 se trouve en vis-à-vis d'un trou 66 aménagé dans le battant 54 de sorte que ce bouton 62 peut être enfoncé même lorsque le battant 54 est dans sa position fermée. Pour déclencher le déplacement de la serrure 60 vers sa position déverrouillée, le bouton 62 doit être enfoncé. A cet effet, le bouton 62 génère un signal d'enfoncement uniquement dans son état enfoncé.

La boîte 42 comporte aussi un capteur 68 capable de générer un signal de présence d'un colis à l'intérieur du coffre 50 uniquement lorsqu'un colis est présent à l'intérieur de ce coffre. A l'inverse, en l'absence de colis à l'intérieur du coffre 50, le capteur 68 ne génère aucun signal de présence. Le signal de présence est transmis au portier 10 par l'intermédiaire de la liaison 64. Un tel capteur 68 est par exemple une balance sensible à la masse d'un objet déposé sur le fond horizontal du coffre 68. Ce capteur 68 peut aussi être un capteur optique qui détecte la présence d'un colis en réponse à la coupure d'un faisceau lumineux.

Enfin, la boîte 42 comporte un mécanisme 70 qui sollicite en permanence le battant 54 vers sa position fermée. Typiquement, ce mécanisme 70 est réalisé à l'aide d'un ressort ou d'une lame-ressort. Ainsi, en l'absence d'autre force exercée sur le battant 54, le mécanisme 70 le ramène automatiquement dans sa position fermée.

La figure 3 représente plus en détail un exemple de mode de réalisation du portier 10. Le portier 10 comprend :
- une interface homme-machine 80,
- un émetteur/récepteur 82 apte à établir la liaison 18 avec le réseau 22,
- une centrale 84 d'accès utilisée pour autoriser et, en alternance, à interdire l'accès à la résidence 2,
- une unité 90 de commande apte à commander les différents équipements du portier 10 et les serrures électriques 14 et 60,
- une mémoire 92, et
- un bus local 94 de transmission d'informations pour raccorder les uns aux autres les différents équipements du portier 10.

Ici, le portier 10 reprend les caractéristiques du portier électrique décrit dans la demande EP2239932, complétées par des caractéristiques supplémentaires pour gérer en plus l'accès aux boîtes aux lettres 42 à 44. Le lecteur peut donc se référer à cette demande pour une description plus détaillée des caractéristiques déjà connues d'un tel portier et, en particulier, celles nécessaires pour établir une visioconférence entre le portier 10 et le combiné 28 ou 32.

L'interface 80 permet :
- l'établissement et la réalisation d'une communication par visioconférence,
- la sélection de l'un quelconque des résidents de la résidence 2, et
- l'acquisition de caractères alphanumériques.

Par exemple, l'interface 80 est formée d'un écran 96, d'un microphone et d'un haut-parleur 98, d'une caméra 100 et d'un clavier 102.

La centrale d'accès 84 est équipée d'un lecteur 104 de clés. Ici, ce lecteur 104 est un lecteur de clés à transpondeur. Plus précisément, cette centrale 84 est apte à lire les informations d'accès enregistrées dans une clé à transpondeur et à les comparer à des paramètres d'accès 106 pour autoriser et, en alternance, interdire l'ouverture de la porte 6. Les paramètres 106 sont enregistrés dans la mémoire 92. Les paramètres 106 sont des paramètres programmables. Ces paramètres 106 comporte ici en plus des paramètres d'accès pour autoriser et, en alternance, interdire aussi l'accès aux boîtes aux lettres.

La mémoire 92, en plus des paramètres d'accès 106, comporte également des paramètres d'appel 108 associés à chaque résident. Par exemple, les paramètres d'appels associés à chaque résident sont :
- le nom du résident,
- le numéro de téléphone de son combiné.

De nombreux autres paramètres d'appel sont possibles. Par exemple, pour chaque résident, il est possible de préciser un second numéro de téléphone à composer si le premier numéro correspond à une ligne occupée ou ne répond pas. Ces paramètres d'appel sont des paramètres programmables.

L'unité 90 commande notamment le fonctionnement de chacun des équipements du portier 10 et des équipements raccordés au portier 10. L'unité 90 gère également les mises à jour des différents paramètres programmables enregistrés dans la mémoire 92. Ici, l'unité 90 comporte en particulier :
- un module 110 de commande de la serrure 14, et
- un module 112 de gestion des boîtes aux lettres situées à l'intérieur du hall 8.

A cet effet, l'unité 90 est raccordée à la serrure 14 et à chacune des serrures 60 par l'intermédiaire, ici, de liaisons filaires.

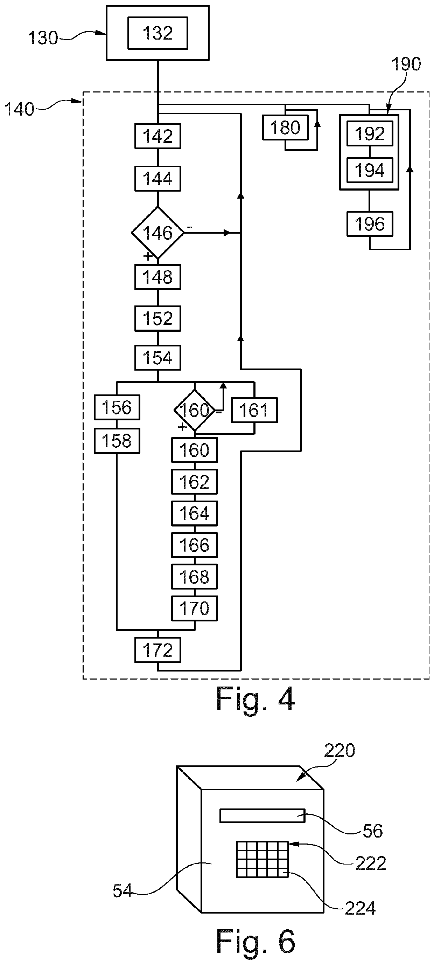

L'unité 90 est typiquement réalisée à partir d'un microprocesseur programmable apte à exécuter des instructions enregistrées sur un support d'enregistrement d'informations. A cet effet, ici, l'unité 90 est raccordée à la mémoire 92 et la mémoire 92 comporte les instructions et données nécessaires à l'exécution du procédé de la figure 4.

Le fonctionnement du système 4 va maintenant être décrit plus en détail en référence au procédé de la figure 4.

Le procédé débute d'abord par une phase 130 d'installation du système 4. Lors de cette phase 130, le portier 10 est scellé dans un mur de la résidence 2 à côté de la porte 6 et les boîtes aux lettres 42 à 44 sont installées à l'intérieur du hall 8. Ensuite, les serrures 14 et 60 sont raccordées au portier 10.

Toujours lors de la phase 130, lors d'une étape 132, le portier 10 est configuré et mis à jour. Plus précisément, lors de cette étape 132, les différents paramètres programmables de ce portier sont enregistrés dans sa mémoire 92. Par exemple, c'est lors de cette étape que les paramètres 106 et 108 sont programmés. A cet effet, le poste 39 établit une liaison avec le portier électrique par l'intermédiaire du réseau 22 et de la liaison 18 et établit ainsi une liaison de transmission d'informations entre le poste 39 et le portier 10 par l'intermédiaire de l'émetteur/récepteur 82, des réseaux 22 et 26 et de la passerelle 24. Une fois la liaison établie, le portier 10 transmet un identifiant au poste 39. Cet identifiant permet au poste 39 d'identifier le portier 10 parmi l'ensemble des portiers électriques susceptibles de le contacter. Si l'identifiant est reconnu, le poste 39 ouvre alors une session. Une session est l'exécution par le poste 39 d'une tâche de configuration d'un portier particulier qui s'est identifié au préalable. La session dure tant que la tâche de configuration s'exécute sur le poste 39. Ici, le poste 39 transmet au portier 10, lors de la même session, les paramètres 106 et 108. Ainsi, ces paramètres sont reçus quasiment en même temps par le portier 10, ce qui permet une mise à jour quasi-simultanée des paramètres permettant de contrôler l'accès à la résidence 2, aux boîtes aux lettres 42 à 44 et des paramètres permettant de contacter le résident. Ainsi, les inconvénients liés à un décalage temporel entre la mise à jour des paramètres 106 et 108 ne se produisent pas. De plus, une seule opération d'identification de l'adresse de l'émetteur/récepteur 82 sur le réseau public est réalisée.

Par exemple, les paramètres 106 d'accès programmés comportent :
- une liste d'identifiants de clés autorisant l'accès au hall 8 de la résidence 2, et
- pour chaque boîte aux lettres raccordée au portier 10, une liste d'un ou plusieurs codes de déverrouillage autorisant l'accès à l'intérieur de cette boîte aux lettres ainsi qu'un identifiant du résident ou des résidents autorisés à ouvrir cette boîte aux lettres.

Ici, un code de déverrouillage autorisant l'accès à l'intérieur d'une boîte aux lettres donnée est différent de ceux autorisant l'accès à l'intérieur d'autres boîtes aux lettres. Ainsi, un même code de déverrouillage ne peut autoriser l'accès qu'à une seule boîte aux lettres.

Les identifiants de résidents associés à une liste de codes de déverrouillages d'une boîte aux lettres permettent de limiter le droit d'ouvrir à distance cette boîte aux lettres aux seuls résidents ainsi identifiés.

L'étape 132 est exécutée à chaque changement de résident ou modification concernant un résident habitant la résidence 2 et non pas uniquement lors de l'installation du portier 10.

Une fois le système 4 installé et configuré, on procède à une phase 140 d'exploitation de ce système. Lors de cette phase d'exploitation, plusieurs modes de fonctionnement sont possibles. Par la suite, seuls les modes de fonctionnement qui ne sont pas déjà décrits dans la demande EP2239932 sont décrits en détails.

Le premier mode de fonctionnement correspond au cas où la personne qui se présente devant le portier 10 est un livreur souhaitant livrer un colis dans la boîte aux lettres d'un résident. On suppose par la suite que la boîte aux lettres du résident est la boîte aux lettres 42.

Initialement, lors d'une étape 142, le livreur se présente devant le portier 10 et sélectionne à l'aide de l'interface 80 le résident de la résidence 2 auquel le colis est destiné.

En réponse à cette sélection, lors d'une étape 144, le portier 10 appelle, à l'aide de l'émetteur/récepteur 82 et par l'intermédiaire de la liaison 18 et du réseau 22, le combiné du résident sélectionné. A cet effet, lors de l'étape 144, les paramètres d'appel associés au résident sélectionné sont utilisés.

Lors d'une étape 146, l'unité 90 vérifie si le combiné du résident appelé a pris la ligne. Dans la négative, le procédé s'arrête. Dans l'affirmative, une liaison de transmission d'informations entre l'unité 90 et le combiné du résident est établie.

Ensuite, lors d'une étape 148, un message de présentation du portier électrique est automatiquement transmis au combiné du résident et présenté au résident par l'intermédiaire de son combiné. Ce message de présentation indique que l'appel reçu provient d'un portier électrique. Avantageusement, ce message de présentation contient également un identifiant du portier électrique qui appelle et un identifiant d'une touche ou de plusieurs touches à enfoncer associées chacune à une explication du résultat que provoque l'enfoncement de cette touche. Typiquement, le message de présentation comprend, par exemple, au moins :
- un identifiant d'une touche qui, lorsqu'elle est enfoncée, active la visioconférence,
- un identifiant d'une touche qui, lorsqu'elle est enfoncée, déclenche la transmission au module 110 d'une commande d'ouverture de la porte 6, et
- un identifiant d'une touche qui, lorsqu'elle est enfoncée, déclenche la transmission au module 112 d'un code de déverrouillage de la serrure 60 de la boîte aux lettres 42.

Ce message de présentation est affiché sur le combiné du résident appelé. Il permet donc d'acquérir par l'intermédiaire de ce combiné différentes commandes du système 4.

Ensuite, lors d'une étape 152, le combiné vérifie si une touche d'activation de la communication par visioconférence a été enfoncée par le résident. Dans l'affirmative, une communication par visioconférence entre le résident et le livreur est déclenchée.

Après avoir conversé avec le livreur, si le résident souhaite accepter la livraison du colis que lui présente le livreur, lors d'une étape 154, le résident enfonce, dans un ordre quelconque, les deux touches de son combiné qui provoque, respectivement :
- la transmission, par l'intermédiaire de liaison de transmission d'informations établie, de la commande d'ouverture de la porte 6, et
- la transmission, par l'intermédiaire de la même liaison de transmission d'informations, du code de déverrouillage de la serrure 60 de la boîte 42.

Dans le cas où la liaison de transmission d'informations est une simple liaison téléphonique, alors la commande d'ouverture et le code de déverrouillage peuvent être transmis sous la forme de tonalités DTMF (« Dual-Tone Multi-Frequency) par exemple. Dans le cas où la liaison de transmission d'informations est établie par l'intermédiaire d'un réseau à commutation de paquets, la commande d'ouverture et le code de déverrouillage peuvent être transmis sur un canal différent du canal utilisé pour transporter la voix. Par exemple, dans le cas d'une liaison Internet utilisant le protocole IP, le canal utilisé pour la transmission de la commande d'ouverture et du code de déverrouillage correspond à un numéro de port différent du numéro de port utilisé pour la transmission de la voix et/ou des images.

Lors d'une étape 156, en réponse à la réception de la commande d'ouverture de la porte 6, le module 110 transmet immédiatement la commande d'ouverture à la serrure 14. Ensuite, toujours lors de l'étape 156, le portier 10 transmet au combiné, par l'intermédiaire de la liaison 18 et du réseau 22, un accusé d'exécution de la commande d'ouverture. Cet accusé d'exécution est présenté au résident par l'intermédiaire de l'interface 36, ce qui lui permet de vérifier que sa commande d'ouverture a bien été prise en compte.

En réponse, lors d'une étape 158, la serrure 14 bascule de sa position verrouillée vers sa position déverrouillée. Le livreur peut alors librement déplacer la porte 6 vers sa position ouverte et accéder à l'intérieur du hall 8.

En parallèle de l'étape 156, lors d'une étape 160, en réponse à la réception d'un code de déverrouillage par l'intermédiaire de la liaison établie, le module 112 compare ce code de déverrouillage reçu aux paramètres d'accès 106 pour déterminer si le code de déverrouillage reçu est un code de déverrouillage valide. Un code de déverrouillage est dit « valide » s'il correspond à des paramètres d'accès 106 qui autorisent l'accès à la boîte aux lettres 42 associé au résident appelé. Dans le cas contraire, le code de déverrouillage reçu est dit « invalide ». Si un code de déverrouillage invalide est reçu, alors le module 112 interdit l'accès à la boîte aux lettres 42 tant qu'un code de déverrouillage valide n'est pas reçu.

Ici, lors de l'étape 160, le module 112 vérifie que les deux conditions suivantes sont vérifiées pour établir que le code de déverrouillage reçu est un code de déverrouillage valide :
- le code de déverrouillage reçu appartient à l'une des listes pré-enregistrées de codes de déverrouillage autorisés à ouvrir la boîte aux lettres 42, et
- l'identifiant du résident sélectionné lors de l'étape 142 est associé à cette liste par les paramètres 106.

Également en parallèle de l'étape 156, lors d'une étape 161, en réponse à la réception de la commande d'ouverture de la porte 6, le module 112 déclenche immédiatement une minuterie qui décompte un délai prédéterminé DT. Le délai DT est par exemple enregistré dans la mémoire 92. Le délai DT est fixé pour laisser le temps nécessaire au livreur pour ouvrir la porte 6 et se déplacer jusqu'au groupe 40 de boîtes aux lettres. Par conséquent, le délai DT est supérieur à 5 s et, généralement, supérieur à 10 s ou 20 s. Le délai DT est généralement également inférieur à 5 min ou 1 min. Tant que le délai DT ne s'est pas complètement écoulé, le module 112 inhibe la transmission à la serrure 60 de la commande de déverrouillage de cette serrure.

Ensuite, lors d'une étape 162, une fois que la minuterie a terminé de décompter le délai DT, en réponse à la réception du code de déverrouillage valide, le module 112 génère et transmet immédiatement la commande de déverrouillage appropriée à la serrure 60. Ainsi, si un code de déverrouillage valide est reçu alors que la minuterie n'a pas fini de décompter le délai DT, la transmission de la commande de déverrouillage est retardée jusqu'à la fin du décompte du délai DT. A l'inverse, si un code de déverrouillage valide est reçu alors que la minuterie a déjà fini de décompter le délai DT, alors la commande de déverrouillage est immédiatement transmise après la réception du code de déverrouillage valide.

Toujours lors de l'étape 162, le portier transmet au combiné, par l'intermédiaire de la liaison 18 et du réseau 22, un accusé d'exécution de la commande de déverrouillage. Cet accusé d'exécution est présenté au résident par l'intermédiaire de l'interface 36, ce qui lui permet de vérifier que sa commande déverrouillage a bien été prise en compte.

En réponse à la réception de la commande de déverrouillage, lors d'une étape 164, la serrure 60 bascule dans un état d'attente du signal d'enfoncement du bouton 62 et déclenche une minuterie qui décompte une durée prédéterminée DV. Typiquement, la durée prédéterminée DV est choisie pour laisser suffisamment de temps pour que le livreur puisse identifier et appuyer sur le bouton 62 de la boîte aux lettres à ouvrir. Par exemple, la durée DV est supérieure à 30 secondes ou 1 minute et, généralement, inférieure à cinq minutes.

Lorsque le bouton 62 de la boîte aux lettres 42 est enfoncé, un signal d'enfoncement est transmis à la serrure 60. Si le signal d'enfoncement est reçu alors que la minuterie est en train de décompter la durée DV, alors, lors d'une étape 166, la serrure 60 se déplace immédiatement de sa position verrouillée vers sa position déverrouillée. A l'inverse, si le signal d'enfoncement est reçu en dehors de l'intervalle de temps où la durée DV est décomptée, la serrure 60 reste dans sa position verrouillée. Ainsi, dans ce mode de réalisation, le déplacement de la serrure 60 de sa position verrouillée vers sa position déverrouillée est conditionné à la réception du code de déverrouillage et du signal d'enfoncement dans un intervalle de temps inférieur ou égal à la durée DV.

Ainsi, après avoir été autorisé à pénétrer à l'intérieur du hall 8, le livreur doit ensuite enfoncer le bouton 62 avant que la durée DV ne se soit complètement écoulée. S'il y arrive, la serrure 60 se déplace vers sa position déverrouillée. Le livreur peut alors librement déplacer le battant 54 vers sa position ouverte et déposer le colis à l'intérieur du coffre 50. Dans le cas contraire, la serrure 60 reste dans la position verrouillée. Le livreur peut alors, par exemple, demander au résident qu'il réitère l'étape 154. Dans ce cas, le procédé retourne directement à l'étape 154.

Lors d'une étape 168, le dépôt du colis l'intérieur du coffre 50 est détecté par le capteur 68. En réponse, le capteur 68 transmet à l'unité 90, par l'intermédiaire de la liaison 64, un signal de présence de colis.

Lors d'une étape 170, en réponse à la réception de ce signal de présence de colis, l'unité 90 transmet au combiné, par l'intermédiaire de la liaison 18 et du réseau 22, un accusé de dépôt du colis à l'intérieur de la boîte aux lettres 42. Cet accusé de dépôt est présenté au résident par l'intermédiaire de l'interface 36, ce qui lui permet de vérifier qu'un colis a bien été déposé par le livreur à l'intérieur de sa boîte aux lettres.

Après avoir reçu l'accusé de dépôt, lors d'une étape 172, le résident met fin à la liaison de transmission d'informations établie entre son combiné et le portier 10.

Un deuxième mode de fonctionnement correspond au cas où le résident présente sa clé devant le lecteur 104 du portier 10. Dans ce cas, lors d'une étape 180, le portier 10 signale automatiquement au résident la présence d'un colis dans sa boîte aux lettres par l'intermédiaire de l'interface 80 dès que la clé de ce résident passe à proximité du lecteur 104. A cet effet, le résident est identifié à partir des informations contenues dans sa clé à transpondeur. En réponse, l'unité 90 vérifie si le capteur 68 émet un signal de présence de colis. Dans l'affirmative, l'unité 90 commande l'interface 80 pour signaler au résident la présence d'un colis dans sa boîte aux lettres. Par exemple, l'unité 90 commande l'affichage sur l'écran 96 d'un message de signalisation de la présence d'un colis. Suite à ce signalement, le résident peut alors décider d'ouvrir sa boîte aux lettres. Par exemple, le déplacement de la serrure 60 vers sa position déverrouillée est déclenchée en enfonçant une touche particulière du clavier 102. L'enfoncement de cette touche particulière déclenche la transmission de la commande de déverrouillage de la serrure 60 uniquement si, par exemple, le résident présente en même temps sa clé 38 devant le lecteur 104.

Un troisième mode de fonctionnement correspond au cas où la possibilité d'interroger à distance les boîtes aux lettres est mise à profit pour organiser la tournée du livreur. Dans ce cas, lors d'une étape 190, une application d'optimisation de la tournée du livreur est exécutée sur un serveur ou un terminal mobile transporté par le livreur. Ce serveur ou ce terminal mobile est raccordé au réseau 22. Lorsque cette application est exécutée sur un terminal mobile, ce terminal mobile est typiquement un smartphone. Cette application est également associée à une base de données qui contient pour chaque colis à livrer :
- le numéro de téléphone du portier électrique à utiliser pour accéder au hall d'entrée dans lequel est située la boîte aux lettres où le colis doit être déposé, et
- un identifiant de la boîte aux lettres dans lequel le colis doit être déposé.

Lorsque l'application est exécutée, elle contacte chaque portier électrique dont le numéro de téléphone est contenu dans la base de données et établit, par exemple successivement, une liaison de transmission d'informations avec chacun de ces portiers électriques par l'intermédiaire du réseau 22. A chaque fois qu'une liaison de transmission d'informations est établie, les opérations suivantes sont exécutées. Ici, ces opérations sont décrites dans le cas particulier du portier 10 et de la liaison 18.

Lors d'une opération 192, l'application transmet à l'unité 90 l'identifiant de la boîte aux lettres dans laquelle le livreur doit déposer un colis. Par la suite, on suppose qu'il s'agit de l'identifiant de la boîte aux lettres 42.

En réponse, lors d'une opération 194, le module 112 détermine à partir des mesures du capteur 68 si un colis est déjà présent à l'intérieur de la boîte aux lettres 42. Si le module 112 a déterminé qu'un colis est déjà présent à l'intérieur de la boîte 42, alors, en réponse, par l'intermédiaire de la liaison 18 et de l'émetteur/récepteur 82, une indication de présence d'un colis à l'intérieur de la boîte 42 est transmise par le module 112 à l'application. A l'inverse, si le module 112 a déterminé qu'aucun colis n'est présent à l'intérieur de la boîte 42, alors, en réponse, il transmet à l'application une indication d'absence de colis à l'intérieur de la boîte aux lettres 42.

Ensuite, lors d'une étape 196, l'application exploite ces indications de présence et d'absence de colis dans les boîtes aux lettres pour optimiser la tournée du livreur. Par exemple, dans un cas particulièrement simple, l'application informe simplement le livreur que la boîte aux lettres 42 contient déjà un colis de sorte que le livreur peut alors prendre la décision de retarder temporairement la livraison du colis dans la boîte aux lettres 42 jusqu'à ce que celle-ci soit de nouveau vide.

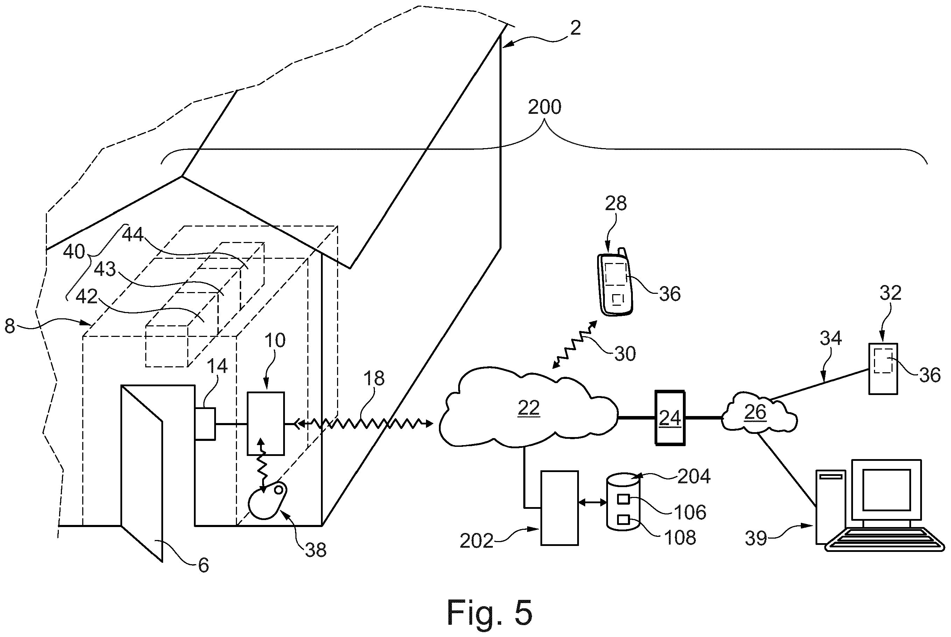

La figure 5 représente un système 200 d'interphonie identique au système 4 à l'exception du fait que plusieurs fonctionnalités exécutées dans le portier 10 sont déportées et implémentées dans un serveur d'accès distant 202 reliée au portier électrique 10 par l'intermédiaire du réseau 22 et de la liaison 18. Par exemple, ici, le module 110 a seulement pour fonction :
- de recevoir, par l'intermédiaire de la liaison 18, la commande d'ouverture transmise par le serveur 202 en réponse à l'acquisition par le combiné du résident sélectionné d'une commande d'ouverture de la porte 6, et
- de transmettre cette commande d'ouverture reçu à la serrure 14.

De façon similaire, ici, le module 112 a seulement pour fonction :
- de recevoir, par l'intermédiaire de la liaison 18, la commande déverrouillage transmise par le serveur 202 en réponse à l'acquisition par le combiné du résident sélectionné d'un code de déverrouillage valide de la serrure 60, et
- de transmettre cette commande de déverrouillage reçu à la serrure 60.

Les autres fonctionnalités des modules 110 et 112 décrites en référence à la figure 4 sont implémentées dans le serveur 202. En particulier, les fonctionnalités suivantes sont implémentées dans le serveur 202 :
- la comparaison du code de déverrouillage transmis par le combiné du résident aux paramètres d'accès pour déterminer s'il s'agit d'un code déverrouillage valide,
- la génération et la transmission au module 112, par l'intermédiaire de la liaison 18, de la commande de déverrouillage si le code de déverrouillage reçu est valide.

A cet effet, le serveur 202 est raccordé à une mémoire 204. Cette mémoire 204 peut contenir une partie ou la totalité des paramètres d'appel et/ou d'accès qui, dans le système 4, sont enregistrés dans la mémoire 92.

Le fonctionnement du système 200 est similaire au fonctionnement du système 4 à l'exception du fait que lorsqu'un livreur a sélectionné un résident, la liaison entre le portier 10 et le combiné du résident sélectionné s'établit par l'intermédiaire du serveur 202. Par exemple, le portier 10 établit une première liaison de transmission d'informations avec le serveur 202. Puis, le portier 10 transmet un identifiant du résident sélectionné au serveur 202 par l'intermédiaire de cette première liaison de transmission d'informations. En réponse, le serveur 202 utilise les paramètres d'appel 108 enregistrés dans sa mémoire 204 pour établir une seconde liaison de transmission d'informations entre lui et le combiné du résident sélectionné. Ensuite, pour la communication entre le livreur et le résident sélectionné, par exemple, le serveur 202 joue simplement le rôle d'une passerelle.

Lorsqu'une commande d'ouverture de la porte 6 est transmise par le combiné du résident sélectionné, celle-ci est transmise au serveur 202 qui la retransmet au module 110 par l'intermédiaire de l'émetteur/récepteur 82. En réponse à la réception de cette commande d'ouverture, le module 110 la transmet immédiatement à la serrure 14.

Lorsqu'un code de déverrouillage de la serrure 60 est transmis par le combiné du résident sélectionné, celui-ci est transmis au serveur 202. Comme indiqué précédemment, le serveur 202 détermine alors s'il s'agit d'un code de déverrouillage valide. Seulement dans le cas d'un code de déverrouillage reçu valide, le serveur 202 génère et transmet au module 112 la commande de déverrouillage de la serrure 60 par l'intermédiaire de l'émetteur/récepteur 82.

Dans ce mode de réalisation, c'est donc une commande de déverrouillage qui est reçue par le module 112 et non plus le code de déverrouillage.

De façon similaire, lorsqu'une clé 38 est présentée devant le lecteur 104 du portier 10, les informations contenues dans cette clé 38 peuvent être transmises au serveur 202 qui les compare aux paramètres d'accès 106 et qui, en réponse, envoie une commande d'ouverture ou non au portier 10. Le fait de déporter les fonctions précédemment implémentées dans le portier électrique vers un serveur commun à plusieurs portiers électriques permet de simplifier chacun de ces portiers électriques.

Dans ce mode de réalisation, la plupart des paramètres programmables nécessaires au fonctionnement des portiers électriques peuvent être mis à jour en établissant simplement une connexion entre le poste 39 de configuration et le serveur 202 sans qu'il soit nécessaire de communiquer directement avec les portiers électriques.

La figure 6 représente une boîte aux lettres 220 identique à la boîte aux lettres 42 sauf que :
- le bouton 62 est remplacé par une unité 222 de contrôle d'accès, et
- le capteur 68 est omis.

L'unité 222 comporte un calculateur électronique et un clavier 224. Le clavier 224 est fixé, par exemple, sans aucun degré de liberté sur la face extérieure du battant 54. Ce clavier 224 est utilisable pour saisir un code de déverrouillage de la serrure 60 de cette boîte aux lettres 220.

L'unité 222 est apte à comparer le code saisi sur le clavier 224 à des codes préenregistrés autorisés à déverrouiller la boîte aux lettres 220. Seulement en cas de correspondance entre le code saisi et l'un des codes préenregistrés, l'unité 222 génère et transmet à la serrure 60 la commande de déverrouillage.

Dans ce mode de réalisation, lorsque la boîte aux lettres 220 est utilisée à la place de la boîte aux lettres 42, il n'existe pas de liaison filaire ou sans fil entre cette boîte aux lettres et le portier 10.

Le fonctionnement d'un système d'interphonie dans lequel les boîtes aux lettres 42 à 44 sont remplacées par des boîtes aux lettres telle que la boîte aux lettres 220 est identique à ce qui a été décrit en référence à la figure 4 sauf sur les points suivants.

En réponse à la réception du code de déverrouillage, le module 112 commande l'interface homme-machine 80 pour communiquer ce code de déverrouillage au livreur. Par exemple, le module 112 commande l'écran 96 pour afficher ce code sur cet écran. Le module 112 ne génère pas et ne transmet pas automatiquement la commande de déverrouillage à la serrure 60 puisque dans ce mode de réalisation, la serrure 60 n'est pas raccordée au portier 10.

Ensuite, le livreur lit et mémorise le code de déverrouillage affiché. Puis, après avoir été autorisé à pénétrer à l'intérieur du hall 8, il saisit à l'aide du clavier 224 le code qui lui a été communiqué.

En réponse, l'unité 222 compare le code saisi sur le clavier 224 aux codes préenregistrés. En cas de correspondance entre le code saisi et l'un des codes préenregistrés, l'unité 222 génère et transmet la commande de déverrouillage à la serrure 60. Dans le cas inverse, aucune commande de déverrouillage n'est générée et la serrure 60 reste donc dans sa position verrouillée.

Ainsi, dans le cas de la boîte aux lettres 220, le procédé de la figure 4 est modifié comme suit :
- lors de l'étape 132, les paramètres d'accès qui autorisent l'accès à la boîte aux lettres 220 sont enregistrés, par tout moyen approprié, dans l'unité 222, et non pas dans la mémoire 92,
- les étapes 160, 161, 162, 164, 166, 168 et 170 sont remplacées par les opérations décrites ci-dessus.

### Chapitre II : Variantes

### Variantes de la boîte aux lettres :

La boîte aux lettres peut être équipée d'un voyant ou de tout autre indicateur permettant d'indiquer à un être humain la position dans laquelle se trouve actuellement la serrure 60.

Le bouton 62 peut être réalisé différemment. Par exemple, en variante, il est réalisé à l'aide d'un écran tactile présent sur la face extérieure du battant 54. Dans un autre mode de réalisation, le bouton 62 est simplement omis.

Le traitement du signal d'enfoncement généré par le bouton 62 peut être réalisé par le module 112. Dans ce cas, le signal d'enfoncement est transmis au module 112 en réponse à l'enfoncement de ce bouton. C'est alors le module 112 qui décompte la durée DV et déclenche le déplacement de la serrure 60 vers sa position déverrouillée uniquement si le signal d'enfoncement et un code de déverrouillage valide sont reçus dans un intervalle de temps de durée inférieure ou égale à DV.

La boîte aux lettres 220 peut être raccordée au portier 10 comme dans le cas de la boîte aux lettres 42, c'est-à-dire par exemple à l'aide de la liaison 64. Dans ce cas, l'ouverture de la boîte aux lettres peut être déclenchée soit pas la saisie d'un code de déverrouillage sur le clavier 224 soit par la réception, par l'unité 222 d'un code de déverrouillage transmis par le module 112. Dans ce dernier cas, si le code de déverrouillage reçu est un code de déverrouillage valide, alors cela déclenche le déplacement de la serrure 60 vers sa position déverrouillée sans qu'il soit nécessaire de saisir ce code de déverrouillage à l'aide du clavier 224. Dans cette variante, le système d'interphonie peut donc fonctionner, en alternance, comme le système 4 et comme le système 200. De préférence, c'est le résident sélectionné qui décide, par exemple en sélectionnant une touche particulière de son combiné, si le module 112 doit :
- seulement afficher le code de déverrouillage sur l'écran 96 pour que le système fonctionne comme décrit dans le cas du système 200 ou, au contraire,
- transmettre automatiquement le code de déverrouillage reçu à l'unité 222 qui génère et transmet automatiquement, en réponse, la commande de déverrouillage à la serrure 60 si le code de déverrouillage reçu est valide.

Le capteur 68 peut être omis dans tous les modes de réalisation décrits ici.

L'unité 222 de contrôle d'accès peut être commune à plusieurs boîtes aux lettres. En particulier, le clavier 224 peut être commun à plusieurs boîtes aux lettres.

### Autres variantes du système d'interphonie :

Le module 112 peut être implémenté dans un circuit de commande situé dans la boîte aux lettres ou dans le groupe 40 de boîtes aux lettres. Dans ce cas, le code de déverrouillage est d'abord reçu par l'intermédiaire de l'émetteur/récepteur 82 puis transmis, par l'intermédiaire de la liaison 64, au module 112.

La centrale d'accès 84 peut être implémentée dans un boîtier distinct de celui contenant les autres équipements du portier 10. Dans ce cas, la centrale d'accès peut être déportée en dehors du portier 10 et raccordée au portier 10 par un liaison filaire ou sans fil.

La centrale d'accès 84 peut aussi être omise dans un mode de réalisation simplifié.

Le portier 10 peut être formé de plusieurs boîtiers séparés mécaniquement les uns des autres et raccordés les uns aux autres par le bus 94. Par exemple, l'émetteur/récepteur 82 est logé dans un boîtier distinct du boîtier dans lequel sont logés les autres éléments du portier 10.

Les modes de réalisations des figures 5 et 6 peuvent être combinés. Dans ce cas, le serveur 202 transmet le code de déverrouillage reçu au module 112. En réponse, le module 112 commande l'interface 80 pour communiquer le code de déverrouillage reçu au livreur.

Dans une variante du système 200 combiné avec les boîtes aux lettres 220, le combiné du résident sélectionné transmet au serveur 202 une commande de déverrouillage et non pas un code de déverrouillage. En réponse à la réception de cette commande de déverrouillage, le serveur 202 génère un code de déverrouillage et le transmet au module 112. Lorsque le module 112 reçoit ce code de déverrouillage, il commande l'interface homme-machine 80 pour le communiquer au livreur.

Dans une autre variante, le combiné du résident génère directement une commande de déverrouillage qui est alors transmise au module 112. En réponse à la réception de cette commande de déverrouillage, le module 112 la transmet directement à la serrure 60 comme déjà décrit dans le cas du système 200. Dans cette variante, aucun code de déverrouillage n'est utilisé.

Dans le cas où le système d'interphonie utilise les boîtes aux lettres 220, en réponse à la réception d'une commande de déverrouillage, le module 112 peut aussi générer un code de déverrouillage de la serrure 60 et commander l'interface 80 pour communiquer ce code généré au livreur.

La clef 38 peut être réalisée différemment. Par exemple, la clef 38 est un terminal mobile, tel qu'un smartphone, capable de communiquer avec la centrale 84 d'accès par l'intermédiaire d'une liaison courte distance telle que par exemple une liaison conforme à l'un des standards suivants : WIFI, Bluetooth ou NFC (Near Field Communication). Le lecteur 104 doit alors être adapté au protocole de communication utilisé par la clef 38.

Dans une autre variante, c'est l'enfoncement d'une seule et même touche du combiné du résident qui déclenche la transmission de la commande d'ouverture de la porte et du code de déverrouillage de la serrure 60.

En variante, la liaison établie entre le portier 10 et le combiné appelé permet seulement une communication orale sans échange d'images. Dans ces cas, la caméra de l'interface 80 et/ou 36 peut être omise. Dans un autre mode de réalisation, la liaison établie entre le portier 10 et le combiné appelé permet seulement l'échange d'informations textuelles. Dans ces cas, la caméra, le microphone et le haut-parleur de l'interface 80 et/ou 36 peuvent être omis. A l'inverse, la liaison établie peut aussi permettre seulement la transmission des images filmées par la caméra 100 sans autoriser d'échange verbale entre le livreur et le résident appelé.

### Variantes du procédé de fonctionnement :

En variante, le code de déverrouillage est reçu par l'intermédiaire d'une autre liaison de transmission d'informations établie avec le combiné du résident sélectionné que celle utilisée pour recevoir la commande d'ouverture de la porte 6. Par exemple, le portier 10 reçoit la commande d'ouverture par l'intermédiaire d'une première liaison établie à l'aide de l'émetteur/récepteur 82 puis met fin à cette première liaison. Ensuite, le livreur déclenche l'établissement d'une seconde liaison par l'intermédiaire du même émetteur/récepteur 82. Le code de déverrouillage est alors transmis par l'intermédiaire de cette seconde liaison.

En variante, le module 112 vérifie uniquement que le code de déverrouillage reçu appartient à la liste de code de déverrouillage autorisés à ouvrir la boîte 42 sans vérifier en plus que l'identifiant du résident appelé est associé à cette liste. Dans ce cas, un résident peut déclencher à distance l'ouverture de la boîte aux lettres d'un autre résident en fournissant un code de déverrouillage valide pour la boîte aux lettres de cet autre résident.

En variante, le déclenchement d'une minuterie avant la transmission de la commande de déverrouillage à la serrure 60 est omis. Par exemple, le module 112 transmet immédiatement la commande de déverrouillage en réponse à la réception d'un code de déverrouillage valide et la serrure 60 l'exécute immédiatement.

Dans un autre mode de réalisation, les étapes 190 et 196 sont mises en oeuvre uniquement pour la boîte aux lettres commune 44.

Les étapes 142 à 172, 180 et 190 à 196 peuvent être implémentées indépendamment les unes des autres. Ainsi, dans un mode de réalisation simplifié, seules les étapes 142 à 172 sont implémentées ou seule l'étape 180 est implémentée ou seules les étapes 190 et 196 sont implémentées.

### Autres variantes :

Dans un cas particulier, le hall d'entrée 8 comporte une seule boîte aux lettres raccordée au portier 10, par exemple, la boîte aux lettres commune 44.

Le déplacement de la porte 6 entre ses positions ouverte et fermée peut être réalisé automatiquement par un moteur.

### Chapitre III : Avantages des modes de réalisation décrits

Le fait que la boîte aux lettres et le portier électrique utilisent le même émetteur/récepteur 82 pour établir la liaison 18 de transmission d'informations avec le combiné du résident simplifie la fabrication du système 4 et en particulier la fabrication de chaque boîte aux lettres. En effet, un seul et même émetteur/récepteur est utilisé au lieu de deux, c'est-à-dire au lieu d'un émetteur/récepteur pour la boîte aux lettres et d'un émetteur/récepteur pour le portier électrique. Cela simplifie aussi l'installation des boîtes aux lettres dans un hall d'entrée car il n'est plus nécessaire de prévoir un raccordement au réseau 22 spécifique et dédié à ces boîtes aux lettres. C'est le raccordement du portier 10 au réseau 22 qui est utilisé.

Le fait que l'émetteur/récepteur 82 soit commun à plus de deux ou trois boîtes aux lettres permet de simplifier encore plus le système 4.

Le fait que les modules 110 et 112 soient tous les deux implémentés à l'aide du même microprocesseur simplifie également le système 4 puisqu'un seul et même microprocesseur est alors utilisé pour cela au lieu de deux comme cela aurait été le cas si les modules 110 et 112 étaient implémentés, respectivement, dans le portier 10 et le groupe 40 de boîtes aux lettres.

La génération automatique de la commande de déverrouillage et sa transmission automatique à la serrure 60 en réponse à la réception d'un code de déverrouillage valide simplifie l'utilisation du système 4 puisque le livreur n'a alors pas à mémoriser ce code pour ouvrir la boîte aux lettres.

Le fait de retarder pendant au moins 5 secondes la transmission de la commande de déverrouillage à la serrure 60 rend plus difficile pour une personne déjà présente dans le hall 8 d'ouvrir la boîte aux lettres avant que le livreur ait lui-même eu le temps de pénétrer à l'intérieur de ce hall. Autrement dit, ce délai permet de rendre plus difficile l'ouverture de la boîte aux lettres en l'absence du livreur et à l'insu du livreur.

Le bouton 62 permet d'attendre que le livreur ait pénétré à l'intérieur du hall 8 avant que la serrure 60 bascule dans sa position déverrouillée.

Le fait que le module de commande 112 puisse seulement recevoir le code de déverrouillage par l'intermédiaire de la même liaison de transmission d'informations que celle utilisée pour recevoir la commande d'ouverture garantit que seule la boîte aux lettres du résident qui a ouvert la porte peut être ouverte. Cela sécurise donc encore plus l'accès aux boîtes aux lettres.

Informer un livreur de la présence d'un colis à l'intérieur d'une boîte aux lettres permet à ce livreur d'éviter des déplacements inutiles.

## Revendications

1. Système d'interphonie d'une résidence, ce système comportant :
- une serrure électrique (14) déplaçable, en réponse à la réception d'une commande d'ouverture :
• depuis une position verrouillée dans laquelle elle verrouille une porte d'entrée dans une position fermée où cette porte d'entrée interdit l'accès à un hall d'entrée depuis l'extérieur de la résidence,
• vers une position déverrouillée dans laquelle la porte d'entrée peut librement être déplacée de sa position fermée vers une position ouverte où un livreur peut pénétrer à l'intérieur du hall d'entrée,
- un portier électrique (10) équipé :
• d'une interface homme-machine (80) permettant à un visiteur, situé à l'extérieur du hall d'entrée de la résidence, de sélectionner l'un quelconque des résidents de la résidence et de communiquer avec le résident sélectionné,
• d'un émetteur/récepteur (82) relié à un réseau public de télécommunication (22, 26), cet émetteur/récepteur étant apte à établir, par l'intermédiaire de ce réseau public de télécommunication, une liaison (18) de transmission d'informations avec un combiné du résident sélectionné à l'aide de l'interface homme-machine, et
• un module (110) de commande de la serrure électrique de la porte d'entrée apte à recevoir, par l'intermédiaire de la liaison (18) de transmission d'informations établie à l'aide de l'émetteur/récepteur du portier électrique, une commande d'ouverture transmise en réponse à l'acquisition d'une commande par le combiné du résident sélectionné, et à transmettre cette commande d'ouverture reçue à la serrure électrique de la porte d'entrée, et
- au moins une boîte (42-44) aux lettres logée à l'intérieur du hall d'entrée, chaque boîte aux lettres comportant :
- un battant (54) déplaçable entre :
• une position ouverte dans laquelle un colis peut être librement introduit ou retiré de l'intérieur de la boîte aux lettres, et
• une position fermée dans laquelle l'introduction ou le retrait d'un colis depuis l'intérieur de la boîte aux lettres est interdit,
- une serrure électrique (60) déplaçable, en réponse à une commande de déverrouillage :
• depuis une position verrouillée dans laquelle elle verrouille le battant (54) dans sa position fermée,
• vers une position déverrouillée dans laquelle le battant (54) peut librement être déplacé de sa position fermée vers sa position ouverte, le système comportant un module (112) de gestion à distance de la boîte aux lettres apte :
• à recevoir, par l'intermédiaire d'une liaison (18) de transmission d'informations établie à l'aide du même émetteur/récepteur du portier électrique que celui utilisé par le module de commande, un code de déverrouillage ou une commande de déverrouillage de la boîte aux lettres transmis en réponse à une commande acquise par le combiné du résident sélectionné, et en réponse
• à transmettre la commande de déverrouillage à la serrure électronique de la boîte aux lettres et/ou à commander l'interface homme-machine du portier électrique pour communiquer au livreur le code de déverrouillage reçu.

2. Système selon la revendication 1, dans lequel :
- le système comporte plusieurs boîtes aux lettres aptes à être logées à l'intérieur du même hall d'entrée, et
- le même module de gestion est apte pour chacune de ces boîtes aux lettres :
• à recevoir, par l'intermédiaire d'une liaison (18) de transmission d'informations établie à l'aide du même émetteur/récepteur du portier électrique que celui utilisé par le module de commande, un code de déverrouillage ou une commande de déverrouillage de cette boîte aux lettres transmis en réponse à une commande acquise par le combiné du résident sélectionné, et en réponse
• à transmettre la commande de déverrouillage à la serrure électronique de cette boîte aux lettres et/ou à commander l'interface homme-machine du portier électrique pour communiquer au livreur le code de déverrouillage reçu.

3. Système selon l'une quelconque des revendications précédentes, dans lequel :
- le portier électrique comporte une unité électronique (90) de commande équipée d'un microprocesseur programmable, et
- le module (112) de gestion et le module (110) de commande sont tous les deux implémentés à l'aide du même microprocesseur de l'unité électronique de commande.

4. Système selon l'une quelconque des revendications précédentes, dans lequel en réponse à la réception du code de déverrouillage ou de la commande de déverrouillage, le module (112) de gestion est apte à transmettre automatiquement la commande de déverrouillage à la serrure électrique de la boîte aux lettres correspondante.

5. Système selon la revendication 4, dans lequel le module (112) de gestion est apte :
- à déclencher une minuterie qui décompte un délai prédéterminé supérieur à 5 secondes à partir de l'instant où une commande d'ouverture de la porte est reçue, puis
- tant que le délai décompté par la minuterie n'est pas expiré, à interdire le déplacement de la serrure électrique de la boîte aux lettres vers sa position déverrouillée, puis
- après l'expiration du délai décompté par la minuterie, à transmettre automatiquement et immédiatement la commande de déverrouillage à la serrure électrique de la boîte aux lettres si un code de déverrouillage valide ou une commande de déverrouillage a été reçu.

6. Système selon l'une quelconque des revendications précédentes, dans lequel :
- chaque boîte aux lettres comporte un bouton (62) de déverrouillage apte à transmettre à la serrure électrique (60) de cette boîte aux lettres un signal d'enfoncement en réponse en son enfoncement par un utilisateur, et
- la serrure électrique (60) de la boîte aux lettres est apte à se déplacer de sa position verrouillée vers sa position déverrouillée uniquement si, à l'intérieur d'un intervalle de temps prédéterminé, les deux informations suivantes ont été reçues :
• le signal d'enfoncement, et
• la commande de déverrouillage.

7. Système selon l'une quelconque des revendications précédentes, dans lequel le module (112) de gestion est uniquement apte à recevoir le code de déverrouillage ou la commande de déverrouillage de la serrure électrique (60) de la boîte aux lettres par l'intermédiaire de la même liaison de transmission d'informations que celle utilisée pour recevoir la commande d'ouverture.

8. Système selon l'une quelconque des revendications précédentes, dans lequel :
- le portier électrique (10) comporte une centrale (84) d'accès apte à lire des informations enregistrées dans une clef, et
- le module (110) de commande est apte à les comparer à des paramètres d'accès préenregistrés pour autoriser et, en alternance, interdire la transmission de la commande d'ouverture à la serrure électrique de la porte d'entrée de la résidence.

9. Système selon l'une quelconque des revendications précédentes, dans lequel :
- la boîte (42-44) aux lettres comporte un capteur (68) apte à détecter la présence d'un colis à l'intérieur de cette boîte aux lettres, et
- le module (112) de gestion est apte, en réponse à la détection par le capteur (68) de la présence d'un colis à l'intérieur de la boîte aux lettres, à transmettre à un combiné d'un livreur ou d'un résident, par l'intermédiaire d'une liaison de transmission d'informations établie à l'aide de l'émetteur/récepteur du portier électrique, l'information selon laquelle un colis est présent à l'intérieur de la boîte aux lettres.

10. Portier électrique pour la réalisation d'un système conforme à l'une quelconque des revendications 1 à 9, dans lequel le portier électrique (10) est équipé :
• d'une interface homme-machine (80) permettant à un visiteur, situé à l'extérieur du hall d'entrée de la résidence, de sélectionner l'un quelconque des résidents de la résidence et de communiquer avec le résident sélectionné,
• d'un émetteur/récepteur (82) relié à un réseau public de télécommunication (22, 26), cet émetteur/récepteur étant apte à établir, par l'intermédiaire de ce réseau public de télécommunication, une liaison (18) de transmission d'informations avec un combiné du résident sélectionné à l'aide de l'interface homme-machine, et
• un module (110) de commande de la serrure électrique de la porte d'entrée apte à recevoir, par l'intermédiaire de la liaison (18) de transmission d'informations établie à l'aide de l'émetteur/récepteur du portier électrique, une commande d'ouverture transmise en réponse à l'acquisition d'une commande par le combiné du résident sélectionné, et à transmettre cette commande d'ouverture reçue à la serrure électrique de la porte d'entrée, le portier électrique (10) comportant un module (112) de gestion à distance de la boîte aux lettres apte :
- à recevoir, par l'intermédiaire d'une liaison (18) de transmission d'informations établie à l'aide du même émetteur/récepteur du portier électrique que celui utilisé par le module de commande, un code de déverrouillage ou une commande de déverrouillage de la boîte aux lettres transmis en réponse à une commande acquise par le combiné du résident sélectionné, et en réponse
- à transmettre la commande de déverrouillage à la serrure électronique de la boîte aux lettres et/ou à commander l'interface homme-machine du portier électrique pour communiquer au livreur le code de déverrouillage reçu.

## Patentansprüche

1. Gegensprechsystem in einem Wohnhaus, wobei dieses System Folgendes umfasst:
- ein elektrisches Schloss (14), das als Reaktion auf den Empfang eines Öffnungsbefehls verschiebbar ist :
- aus einer verriegelten Position, in der sie eine Eingangstür in eine geschlossene Position verriegelt, in der diese Eingangstür den Zugang zu einer Eingangshalle von außerhalb des Wohnheims verhindert,
- zu einer entriegelten Position, in der die Eingangstür frei aus ihrer geschlossenen Position in eine offene Position bewegt werden kann, in der ein Zusteller in das Innere der Eingangshalle gelangen kann,
- einen elektrischen Türsteher (10), der mit ausgestattet ist:
- einer Mensch-Maschine-Schnittstelle (80), die es einem Besucher, der sich außerhalb der Eingangshalle des Wohnheims befindet, ermöglicht, einen beliebigen Bewohner des Wohnheims auszuwählen und mit dem ausgewählten Bewohner zu kommunizieren,
- eines Senders/Empfängers (82), der mit einem öffentlichen Telekommunikationsnetz (22, 26) verbunden ist, wobei dieser Sender/Empfänger geeignet ist, über dieses öffentliche Telekommunikationsnetz eine Verbindung (18) zur Übertragung von Informationen mit einem Handapparat des Bewohners herzustellen, der mithilfe der Mensch-Maschine-Schnittstelle ausgewählt wurde, und
- ein Steuermodul (110) für das elektrische Schloss der Eingangstür, das geeignet ist, über die mithilfe des Senders/Empfängers der elektrischen Türstation hergestellte Informationsübertragungsverbindung (18) einen Öffnungsbefehl zu empfangen, der als Reaktion auf die Erfassung eines Befehls durch den Handapparat des ausgewählten Bewohners übertragen wird, und diesen empfangenen Öffnungsbefehl an das elektrische Schloss der Eingangstür zu übermitteln, und
- mindestens einen Briefkasten (42-44), der im Inneren der Eingangshalle untergebracht ist, wobei jeder Briefkasten umfasst:
- einem Flügel (54), der beweglich ist zwischen :
- eine offene Position, in der ein Paket frei in das Innere des Briefkastens eingeworfen oder aus ihm entnommen werden kann, und
- eine geschlossene Position, in der das Einwerfen oder die Entnahme eines Pakets aus dem Inneren des Briefkastens verboten ist,
- ein elektrisches Schloss (60), das als Reaktion auf einen Entriegelungsbefehl verschiebbar ist :
- aus einer verriegelten Position, in der sie den Flügel (54) in seiner geschlossenen Position verriegelt,
- zu einer entriegelten Position, in der der Flügel (54) frei von seiner geschlossenen Position zu seiner offenen Position bewegt werden kann,
das System ein Modul (112) zur Fernverwaltung der Mailbox umfasst, das geeignet ist :
- über eine Informationsübertragungsverbindung (18), die mithilfe desselben Senders/Empfängers der Türsprechanlage hergestellt wird, den auch das Steuermodul verwendet, einen Entriegelungscode oder einen Befehl zum Entriegeln des Briefkastens zu empfangen, der als Reaktion auf einen Befehl übertragen wird, der vom Handapparat des ausgewählten Bewohners erfasst wird, und als Reaktion auf
- den Entsperrungsbefehl an das elektronische Schloss des Briefkastens zu übermitteln und/oder die Mensch-Maschine-Schnittstelle der elektrischen Türstation zu steuern, um dem Zusteller den empfangenen Entsperrungscode mitzuteilen .

2. System nach Anspruch 1, wobei:
- das System mehrere Briefkästen umfasst, die in der gleichen Eingangshalle untergebracht werden können, und
- das gleiche Verwaltungsmodul für jede dieser Mailboxen geeignet ist:
- über eine Informationsübertragungsverbindung (18), die mithilfe desselben Senders/Empfängers der Türsprechanlage hergestellt wird, den auch das Steuermodul verwendet, einen Entriegelungscode oder einen Befehl zum Entriegeln dieses Briefkastens zu empfangen, der als Reaktion auf einen Befehl übertragen wird, der vom Handapparat des ausgewählten Bewohners erfasst wird, und als Reaktion auf
- den Entsperrungsbefehl an das elektronische Schloss dieses Briefkastens zu übermitteln und/oder die Mensch-Maschine-Schnittstelle der elektrischen Türstation zu steuern, um dem Zusteller den empfangenen Entsperrungscode mitzuteilen.

3. System nach einem der vorhergehenden Ansprüche, wobei:
- die elektrische Türsprechstelle eine elektronische Steuereinheit (90) umfasst, die mit einem programmierbaren Mikroprozessor ausgestattet ist, und
- sowohl das Verwaltungsmodul (112) als auch das Steuermodul (110) mithilfe desselben Mikroprozessors der elektronischen Steuereinheit implementiert werden.

4. System nach einem der vorhergehenden Ansprüche, bei dem als Reaktion auf den Empfang des Entsperrcodes oder des Entsperrbefehls das Verwaltungsmodul (112) in der Lage ist, den Entsperrbefehl automatisch an das elektrische Schloss des entsprechenden Briefkastens zu übermitteln.

5. System nach Anspruch 4, wobei das Verwaltungsmodul (112) in der Lage ist:
- einen Timer auszulösen, der eine vorbestimmte Zeitdauer von mehr als 5 Sekunden ab dem Zeitpunkt abzählt, an dem ein Befehl zum Öffnen der Tür empfangen wird, und dann
- solange die von der Zeitschaltuhr gezählte Zeit noch nicht abgelaufen ist, die Bewegung des elektrischen Schlosses des Briefkastens in seine entriegelte Position zu verbieten, und dann
- nach Ablauf der vom Timer heruntergezählten Zeit automatisch und sofort den Befehl zum Entsperren an das Elektroschloss des Briefkastens zu übermitteln, wenn ein gültiger Entsperrcode oder ein Entsperrbefehl empfangen wurde.

6. System nach einem der vorhergehenden Ansprüche, wobei:
- jeder Briefkasten einen Entriegelungsknopf (62) aufweist, der geeignet ist, an das elektrische Schloss (60) dieses Briefkastens ein Eindrücksignal als Reaktion auf sein Eindrücken durch einen Benutzer zu übermitteln, und
- das elektrische Schloss (60) des Briefkastens nur dann aus seiner verriegelten Position in seine entriegelte Position bewegt werden kann, wenn innerhalb eines vorbestimmten Zeitintervalls die beiden folgenden Informationen empfangen wurden:
- das Signal zum Eindrücken und
- den Befehl zum Aufheben der Sperrung.

7. System nach einem der vorhergehenden Ansprüche, bei dem das Verwaltungsmodul (112) nur dazu geeignet ist, den Entsperrungscode oder den Befehl zum Entsperren des elektrischen Schlosses (60) des Briefkastens über dieselbe Informationsübertragungsverbindung zu empfangen, die zum Empfangen des Öffnungsbefehls verwendet wird.

8. System nach einem der vorhergehenden Ansprüche, wobei:
- die elektrische Türstation (10) eine Zugangszentrale (84) umfasst, die geeignet ist, in einem Schlüssel gespeicherte Informationen zu lesen, und
- das Steuermodul (110) in der Lage ist, sie mit vorab gespeicherten Zugangsparametern zu vergleichen, um die Übertragung des Öffnungsbefehls an das elektrische Schloss der Eingangstür des Wohnheims zuzulassen und abwechselnd zu unterbinden.

9. System nach einem der vorhergehenden Ansprüche, wobei:
- der Briefkasten (42-44) einen Sensor (68) enthält, der geeignet ist, die Anwesenheit eines Pakets im Inneren des Briefkastens zu erkennen, und
- das Verwaltungsmodul (112) in Reaktion darauf, dass der Sensor (68) das Vorhandensein eines Pakets im Inneren des Briefkastens erkennt, in der Lage ist, über eine mithilfe des Senders/Empfängers der elektrischen Türstation hergestellte Informationsübertragungsverbindung die Information, dass sich ein Paket im Inneren des Briefkastens befindet, an einen Handapparat eines Zustellers oder eines Bewohners zu übermitteln.

10. Elektrische Türsprechstelle zur Realisierung eines Systems gemäß einem der Ansprüche 1 bis 9, wobei die elektrische Türsprechstelle (10) mit ausgestattet ist:
- einer Mensch-Maschine-Schnittstelle (80), die es einem Besucher, der sich außerhalb der Eingangshalle des Wohnheims befindet, ermöglicht, einen beliebigen Bewohner des Wohnheims auszuwählen und mit dem ausgewählten Bewohner zu kommunizieren,
- eines Senders/Empfängers (82), der mit einem öffentlichen Telekommunikationsnetz (22, 26) verbunden ist, wobei dieser Sender/Empfänger geeignet ist, über dieses öffentliche Telekommunikationsnetz eine Verbindung (18) zur Übertragung von Informationen mit einem Handapparat des Bewohners herzustellen, der mithilfe der Mensch-Maschine-Schnittstelle ausgewählt wurde, und
- ein Steuermodul (110) für das elektrische Schloss der Eingangstür, das geeignet ist, über die mithilfe des Senders/Empfängers der elektrischen Türstation hergestellte Informationsübertragungsverbindung (18) einen Öffnungsbefehl zu empfangen, der als Reaktion auf die Erfassung eines Befehls durch den Handapparat des ausgewählten Bewohners übertragen wird, und diesen empfangenen Öffnungsbefehl an das elektrische Schloss der Eingangstür weiterzuleiten,
die elektrische Türstation (10) mit einem Modul (112) zur Fernverwaltung des Briefkastens, das geeignet ist :
- über eine Informationsübertragungsverbindung (18), die mithilfe desselben Senders/Empfängers der Türsprechanlage hergestellt wird, den auch das Steuermodul verwendet, einen Entriegelungscode oder einen Befehl zum Entriegeln des Briefkastens zu empfangen, der als Reaktion auf einen Befehl übertragen wird, der vom Handapparat des ausgewählten Bewohners erfasst wird, und als Reaktion auf
- den Entriegelungsbefehl an das elektronische Schloss des Briefkastens zu übermitteln und/oder die Mensch-Maschine-Schnittstelle der elektrischen Türstation zu steuern, um dem Zusteller den empfangenen Entriegelungscode mitzuteilen .

## Claims

1. Intercom system for a residence, the system comprising :
- an electric lock (14) that can be moved in response to receiving a command to open:
- from a locked position in which it locks an entrance door to a closed position in which that entrance door prevents access to an entrance hall from outside the residence,
- to an unlocked position where the entrance door can be freely moved from its closed position to an open position where a delivery person can enter the entrance hall,
- an electric doorkeeper (10) with :
- a man-machine interface (80) allowing a visitor, located outside the residence lobby, to select any of the residents of the residence and to communicate with the selected resident,
- a transmitter/receiver (82) connected to a public telecommunications network (22, 26), said transmitter/receiver being adapted to establish, via said public telecommunications network, an information transmission link (18) with a handset of the resident selected by means of the man-machine interface, and
- a control module (110) for the electric lock of the entrance door adapted to receive, via the information transmission link (18) established with the help of the transmitter/receiver of the electric doorkeeper, an opening command transmitted in response to the acquisition of a command by the handset of the selected resident, and to transmit this received opening command to the electric lock of the entrance door, and
- at least one letterbox (42-44) housed within the entrance hall, each letterbox comprising :
- a door (54) movable between :
- an open position in which a parcel can be freely inserted or removed from the interior of the mailbox, and
- a closed position in which the insertion or removal of a parcel from inside the letterbox is prohibited,
- an electric lock (60) that can be moved in response to an unlocking command:
- from a locked position in which it locks the door (54) in its closed position,
- to an unlocked position in which the door leaf (54) can be freely moved from its closed position to its open position,
the system including a remote mailbox management module (112) capable of:
- to receive, via an information transmission link (18) established with the aid of the same transmitter/receiver of the electric doorkeeper as that used by the control module, an unlocking code or a mailbox unlocking command transmitted in response to a command acquired by the handset of the selected resident, and in response
- to transmit the unlocking command to the electronic lock of the mailbox and/or to control the man-machine interface of the electric doorkeeper to communicate the received unlocking code to the delivery person .

2. The system of claim 1, wherein:
- the system comprises several mailboxes that can be accommodated within the same entrance hall, and
- the same management module is suitable for each of these mailboxes:
- to receive, via an information transmission link (18) established with the aid of the same transmitter/receiver of the electric doorkeeper as that used by the control module, an unlocking code or an unlocking command of this mailbox transmitted in response to a command acquired by the handset of the selected resident, and in response
- to transmit the unlocking command to the electronic lock of this mailbox and/or to control the man-machine interface of the electric doorkeeper to communicate the received unlocking code to the delivery person.

3. A system according to any of the preceding claims, wherein :
- the electric doorkeeper has an electronic control unit (90) equipped with a programmable microprocessor, and
- the management module (112) and the control module (110) are both implemented using the same microprocessor of the electronic control unit.

4. A system according to any one of the preceding claims, wherein in response to receiving the unlock code or the unlock command, the management module (112) is adapted to automatically transmit the unlock command to the corresponding electric mailbox lock.

5. A system as claimed in claim 4, wherein the management module (112) is adapted to :
- triggering a timer that counts down a predetermined time greater than 5 seconds from the moment a command to open the door is received, and then
- as long as the timer has not expired, to prevent the electric lock of the letterbox from being moved to its unlocked position, and
- after the timer has expired, to automatically and immediately transmit the unlocking command to the electric lock of the letterbox if a valid unlocking code or an unlocking command has been received.

6. A system according to any of the preceding claims, wherein :
- each mailbox has an unlocking button (62) adapted to transmit to the electric lock (60) of that mailbox a push-in signal in response to being pushed in by a user, and
- the electric lock (60) of the mailbox is able to move from its locked position to its unlocked position only if, within a predetermined time interval, the following two pieces of information have been received:
- the depression signal, and
- the unlocking command.

7. A system according to any one of the preceding claims, wherein the management module (112) is uniquely adapted to receive the unlocking code or the unlocking command from the electric lock (60) of the mailbox via the same information transmission link as that used to receive the opening command.

8. A system according to any of the preceding claims, wherein :
- the electric doorkeeper (10) comprises an access control unit (84) capable of reading information stored in a key, and
- the control module (110) is able to compare them with pre-registered access parameters to alternately authorise and prohibit the transmission of the opening command to the electric lock of the entrance door of the residence.

9. A system according to any of the preceding claims, wherein :
- the mailbox (42-44) has a sensor (68) capable of detecting the presence of a parcel inside the mailbox, and
- the management module (112) is adapted, in response to the detection by the sensor (68) of the presence of a parcel inside the mailbox, to transmit to a handset of a delivery person or of a resident, via an information transmission link established with the aid of the transceiver of the electric doorkeeper, the information that a parcel is present inside the mailbox

10. An electric doorphone for the realisation of a system according to any one of claims 1 to 9, wherein the electric doorphone (10) is equipped :
- a man-machine interface (80) allowing a visitor, located outside the residence lobby, to select any of the residents of the residence and to communicate with the selected resident,
- a transmitter/receiver (82) connected to a public telecommunications network (22, 26), said transmitter/receiver being adapted to establish, via said public telecommunications network, an information transmission link (18) with a handset of the resident selected by means of the man-machine interface, and
- a control module (110) for the electric lock of the entrance door adapted to receive, via the information transmission link (18) established with the help of the transceiver of the electric doorkeeper, an opening command transmitted in response to the acquisition of a command by the handset of the selected resident, and to transmit this received opening command to the electric lock of the entrance door,
the electric doorkeeper (10) including a remote mailbox management module (112) capable of :
- to receive, via an information transmission link (18) established with the aid of the same transmitter/receiver of the electric doorkeeper as that used by the control module, an unlocking code or a mailbox unlocking command transmitted in response to a command acquired by the handset of the selected resident, and in response
- to transmit the unlocking command to the electronic lock of the mailbox and/or to control the man-machine interface of the electric doorkeeper to communicate the received unlocking code to the delivery person .
